# EUROPEAN PATENT SPECIFICATION

(11) **EP 0 763 350 B1**
(45) Date of publication and mention of the grant of the patent: **12.09.2001**
(21) Application number: 96110974.1
(22) Date of filing: 08.07.1996
(51) Int. Cl.: A61C 8/00

(54) **Anti-rotation oral implant**
Gegen Verdrehung gesichertes Zahnimplantat
Implant dentaire anti-rotatif

(30) Priority: 15.09.1995 IT MI951933
(43) Date of publication of application: 19.03.1997
(73) Proprietor: Ferretti, Giovanni Carlo, 25028 Verolanuova (Brescia) (IT)
(72) Inventor: Ferretti, Giovanni Carlo, 25028 Verolanuova (Brescia) (IT)
(74) Representative: Manzoni, Alessandro

(56) References cited:
- EP-A- 0 636 347
- DE-A- 2 743 035
- FR-A- 2 084 522
- FR-A- 2 115 998
- GB-A- 2 252 501

## Description

The application refers to the field of dental implantology.

Dental prostheses are widely used at present that comprise a part for anchoring to the bone, more properly called "implant", a so-called "stump" screwed onto the implant, the prosthetic tooth being fitted on the stump. The implant, made of material that is inert with respect to the bone, is inserted in a special seat created in the bone itself where it is left until, through the growth of bony tissue, it is incorporated into the bone, acting as an anchor for the stump. Known implants are generally shaped like a relatively large thin perforated blade.

There is a constant trend to improvement in these implants and the methodologies for their application, in order to reduce the time required for fixation of the implant, and the risks and inconvenience to the patient.

The author of the present invention has previously devised and patented a particularly small-sized dental implant for dental prostheses that comprises a body and a base designed for anchoring to the bony part of the jaw. The body comprises a lengthwise series of projections and grooves, the projecting parts preferably being shaped like portions of a sphere and the grooves having a cylindrical lower surface. The base, in the device of the previous invention, has a diameter not exceeding the diameter of the projecting parts of the body. Although the previous invention has generally yielded good results, further possible improvements have nevertheless been identified and achieved with this invention.

In fact the following has been noted with the previous implant: after the prescribed 90 days in which the implant was left in situ so that the bone could grow and integrate the implant, in certain cases during unscrewing of the so-called healing screw or screwing on of the stump, said body underwent a rotation with respect to its seat in the bone, which is undesirable from the viewpoint of stability. GB-A-2 252 501 discloses an oral implant for anchoring and fixing a prosthetic tooth or plurality of teeth up to a full fixed prosthesis, to the bony part of an upper or lower jaw, said implant comprising a body part and a base part integral with each other, said body part having projecting parts and grooves alternating lengthwise along the implant and said implant having means for engagement of a healing screw, and for fixing to a stump, said implant further comprising anti-rotation means for anchoring to the bony tissue of the upper or lower jaw.
EP-A-0 636 347 discloses an oral implant having one or more cross-openings through the sidewall of the implant. The aim of the present invention is to avoid the possibility of a rotation of the implant within its seat, when said implant is inevitably subjected to rotational stresses during removal of the healing screw and/or application of the supporting stump for the prosthetic tooth, and to achieve an optimal longitudinal positioning of the implant in the bone, avoiding an undesirable excessive "sinking" of said implant into the bone, which could give rise to problems later on.

These aims have been achieved with an implant as claimed in claim 1. Further characteristics are stated in the subsequent claims.

In particular the implant comprises a body comprising a longitudinal series of projections and circumferential grooves, and an anti-rotational anchoring means for anchoring to the bone which can comprise a substantially longitudinal channel along said projections and/or at least one transverse hole and/or protruding vertical tabs on the body. The projecting parts have a roundish shape, preferably spherical, or part-spherical, or ellipsoidal or egg-shaped, or shaped like a part of these solid bodies. The implant further comprises a base part that has at least one shoulder extending beyond the diameter of the projecting parts on the body, so as to be able to engage a corresponding shoulder made in the bone, to improve positioning of the implant.

The new implant allows optimal anchoring to the bone both longitudinally to the implant itself (that is to the application hole) and in a crosswise and rotary direction. Moreover, the new implant allows precise positioning, longitudinally to the implant

itself and to the hole in the bone, thanks to engagement of the shoulder formed by its base against the shoulder obtained in the housing hole in the bone, Lastly, it allows healing time to be reduced.

Further characteristics and advantages of the invention will be made clear by reading the description that follows, by way of non-limiting example only, with reference to the attached drawings in which:
- Figure 1: is an enlarged side view of an implant according to a first embodiment of the present invention;
- Figure 2: is an axial sectional view along a plane indicated by 2-2 in Figure 1;
- Figure 3: is a cross sectional view along a plane indicated by 3-3 in Figure 1;
- Figure 4: is a sectional view along a plane indicated by 4-4 in Figure 1;
- Figure 5: is an enlarged side view of a modified embodiment of the implant according to the invention;
- Figure 6: is a sectional view along plane 6-6 in Figure 5;
- Figure 7: is an illustration of an implant according to Figure 1-4, shown implanted in a jaw; the jaw is drawn schematically in sectional view and hatched, and the implant is already incorporated into the bone; a prosthetic tooth is applied to a stump screwed into the implant;
- Figure 8: is a schematic sectional view of the jawbone in which a hole has been made to receive the implant;
- Figure 9: is an enlarged side view of a further embodiment of the present invention:
- Figure 10: is a sectional view along 10-10 in Figure 9;
- Figure 11: is a side elevational view of yet another embodiment of the invention;
- Figure 12: is a sectional view along 12-12 in Figure 11;
- Figure 13: shows a side view of a modified embodiment with anti-rotation tabs extending from the base;
- Figure 14: is a view along 14-14 in Figure 13;
- Figure 15: shows the implant of Figures 13 and 14 in position in a jaw drawn schematically in an enlarged sectional view with a prosthetic tooth applied on a stump screwed into the implant.

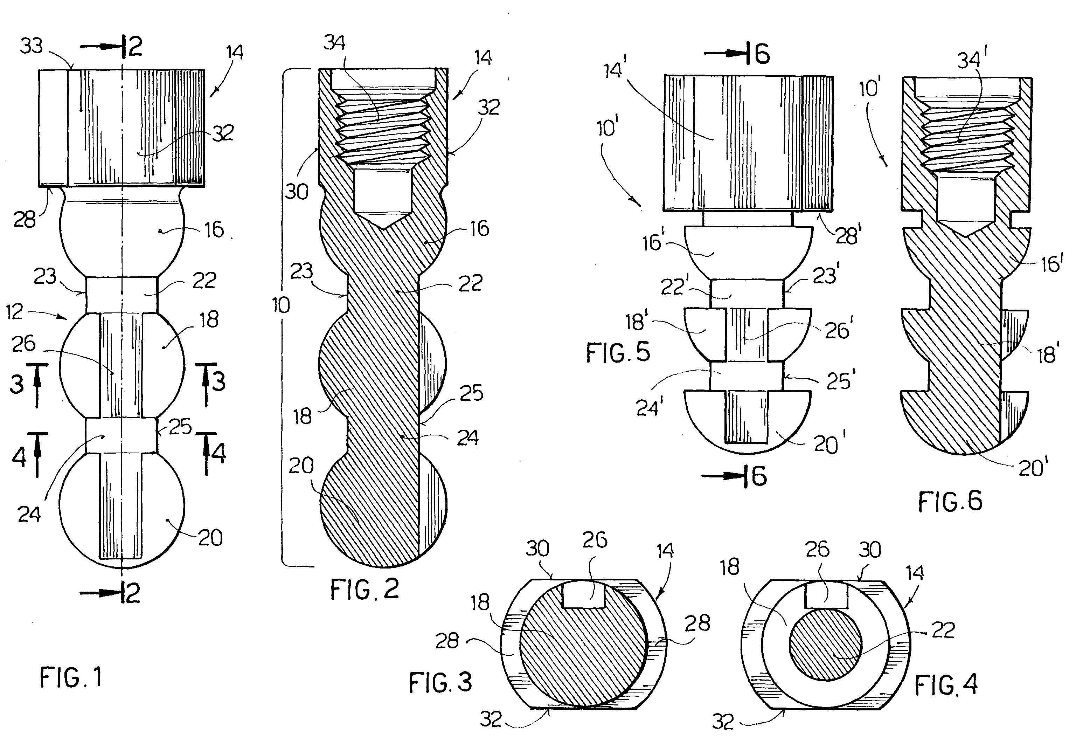

With reference first to figures 1, 2, 3, 4 and 7, an exemplary embodiment of the new implant, indicated as a whole with reference number 10, comprises a body part 12 and a base part 14 integral with each other. The body part 12 comprises two or more (three in the example in the figure) roundish projecting parts, in this case substantially spherical or part-spherical in shape, indicated respectively by reference numbers 16, 18, 20. It should be noted here that, although in this example and in the following ones it has been preferred to depict the projecting parts with a spherical or part-spherical shape, it is foreseen within the scope of the invention for these parts to have other shapes, such as an ellipsoid, egg , pear or other shape, or generically a shape with an oval projection on a plane, with the long axis coinciding with or crosswise to the longitudinal axis of the implant. Between the parts 16 and 18 a neck with a smaller diameter indicated by 22, forms a groove 23 with said parts. Between the parts 18 and 20, a smaller neck 24, substantially cylindrical, forms a circumferential groove 25. The part-spherical part nearest the base 14 is indicated by 16 and is joined with a curve to the base 14. According to the invention, in one of its embodiments, along the longitudinal axis a of the implant and parallel to it extends a means for anchoring to the bone, in this case made like a longitudinal channel indicated by 26, extending along the projecting parts 18 and 20. This channel or milled part 26 reaches in depth to the surface of the cylindrical parts 22, 24. The width of the channel 26 is preferably between 1 and 3 mm with a diameter of the parts 18, 20 of about 3-4 mm.

It is foreseen within the scope of the invention that there can be a plurality of longitudinal, or approximately longitudinal channels, spaced around the circumference.

The base 14 has an elongated shape in plan view having at least one dimension larger than the diameter of the projecting parts 20 (18, 16) of the body, so as to form shoulders 28 extending beyond the lateral surface of the body. The base 14 preferably has two flat longitudinal surfaces facing each other, indicated by 30, 32. Inside the implant, starting from the outer surface 33 of the base, extends a threaded hole indicated by 34, per se known, onto which firstly a so-called healing screw is screwed, during the stage in which the implant is inserted in the bone and covered with the gum to allow bone formation or growth around and inside it so as to incorporate it, and subsequently to allow engagement of a stump screw, on which the prosthetic tooth will be fitted.

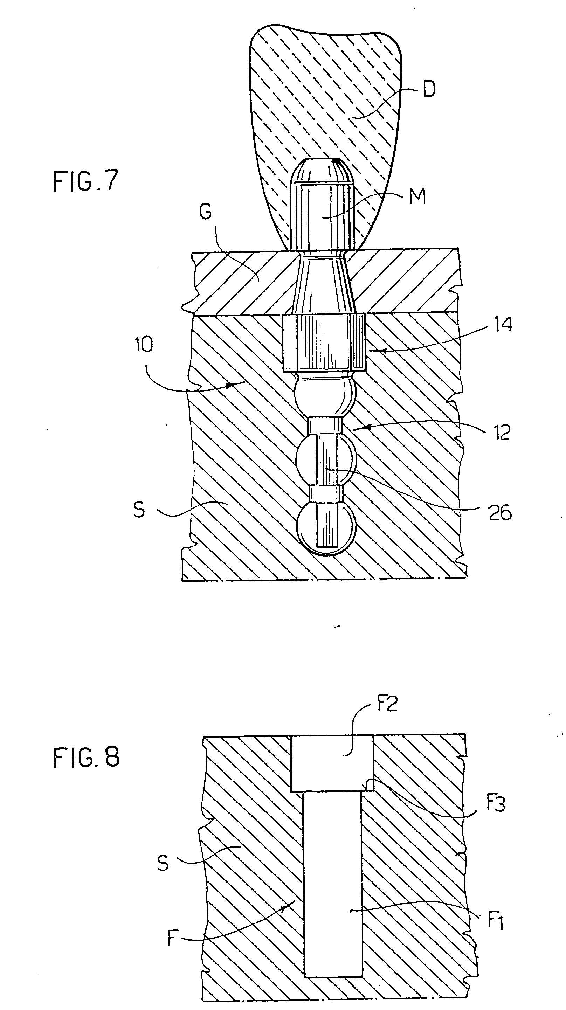

In Figure 7 the bony tissue in the jaw is indicated by S and the gum tissue by G. It can be seen that with the new implant 10 the bony tissue S can occupy the spaces defined by the grooves between the surfaces of the spherical projecting parts 16, 18 and the surface of the neck 22, and between the surfaces defined by the projecting parts 18, 20 and the surface of the neck 24, so as to ensure a good resistance to pulling out of the implant in an axial direction. It can also occupy the spaces left free inside the channel 26, so as to ensure a good resistance to rotation around the longitudinal axis a. In figure 8, a stump M is shown engaged in the implant 10, on which a tooth D is applied.

A preferred material for the implant is titanium 2.

A brief description follows of the method of use of the new implant.

A hole or ditch F is made in the bony tissue of the jaw (Fig. 8), the deepest part, F1, of said hole having a smaller diameter and a less deep coaxial part, F2, having a larger diameter; a shoulder F3 extends between the parts. The implant 10 is inserted in the hole F until it engages the shoulder 28 of the base against the shoulder F3 in the bone and the gum G is closed. The implant is left to rest for the time necessary for the bone to form again (estimated, for the implant in question, to be particularly short compared with conventional implants - about 60 days instead of the usual 90 days). The gum can then be re-opened, the healing screw (not illustrated) removed, and the stump M and the prosthetic tooth D fitted. A plurality of teeth can thus be fixed, up to a full fixed prosthesis.

In figures 5 and 6 a variant of the implant is illustrated, indicated by 10'. The implant 10' has projecting parts 16', 18' and 20' with a hemispherical shape, separated by grooves 23' and 25'. This makes it possible to create an implant with a more compact shape lengthwise.

The remaining parts of the implant 10' correspond to those of the implant 10. They are indicated by the same reference numbers, but with a prime.

It should be noted that although in the embodiments shown the channel 26 or 26' extends only along a portion of the body, it is foreseen and within the scope of the invention for it to be able to extend along the whole body. Moreover, although the channel 26 or 26' is shown extending radially in depth to the bottom surfaces of the grooves 23, 25, or 23', 25', it can have different depths.

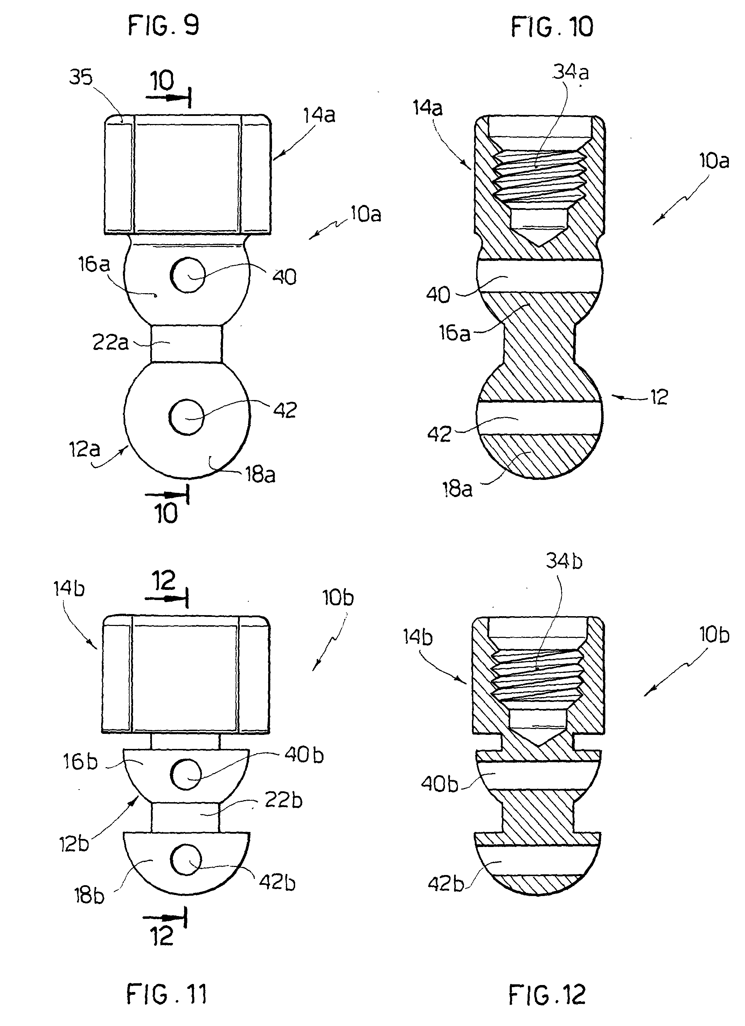

In the embodiment illustrated in Figures 9 and 10, an implant 10a comprises a body part 12a and a base part 14a integral with each other. The body part 12a comprises two projecting parts 16a, 18a (there could even be three or four of them) preferably having a substantially spherical shape, in which the means for anchoring to the bone consists of through holes, or possibly dead holes, 40, 42. The projecting parts are generally separated by a neck 22a.

The holes 40, 42, when the implant is placed in position, allow bony tissue to grow inside them, thus securing a firm anchorage of the implant. The base 14a has a threaded hole 34a into which a healing screw or a stump screw can be screwed. The base 14a of this implant is rounded at the distal edge 35. This rounding is also preferable on other embodiments.

The implant 10b in Figures 11 and 12 is a variant of the implant 10a; the parts of the implant 10b corresponding to those of the implant 10a have the same reference numbers but followed by the letter b. The implant 10b comprises through or dead anchoring holes, 40b and 42b, preferably situated in the hemispherical projecting parts 16b and 18b.

Although they are not illustrated in detail, implants are also foreseen according to the invention in which the anchoring means comprises longitudinal grooves as well as holes with an axis crosswise to the longitudinal direction of the implant.

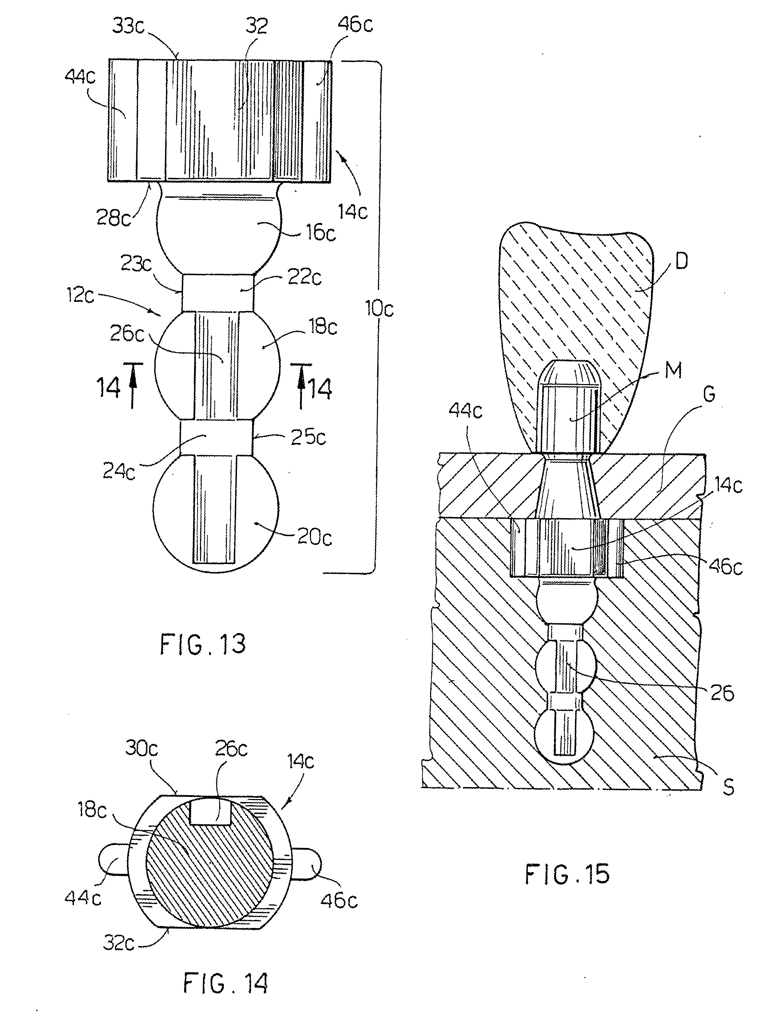

The implant 10c in Figures 13-15 comprises similar parts to those of the implant 10 in Figure 1; these parts bear the same reference numbers as in Figure 1 but with the letter c and will not be further described herein.

The implant 10c also comprises, as further anti-rotation means, opposite tabs 44c, 46c, protruding from opposite sides of the base 32c and extending substantially vertically.

The tabs 44c, 46c can be provided in combination with one or more of the other anti-rotation means (vertical grooves, through holes) or alone. The implant 10c is shown in use in a jaw in Figure 15, similar to Figure 7, to which reference is made without any need for further explanations.

Further variations are possible within the scope of the attached claims.

## Claims

1. An oral implant for anchoring and fixing a prosthetic tooth or plurality of teeth up to a full fixed prosthesis, to the bony part of an upper or lower jaw, said implant comprising a body part (12; 12'; 12a; 12b) and a base part (14; 14'; 14a; 14b; 14c) integral with each other, said body part having projecting parts (16, 18, 20; 16', 18', 20' ...) and grooves (22, 24; 22', 24'; ...) alternating lengthwise along the implant and said implant having means (34; 34'; 34a; 34b) for engagement of a healing screw, and for fixing to a stump, said implant further comprising anti-rotation means for anchoring to the bony tissue of the upper or lower jaw, **characterized in that** said base part (14; 14'; 14a; 14b) has at least one transverse dimension greater than the maximum transverse dimension of said body part so as to form a shoulder (28; 28').

2. An implant according to claim 1 **characterized in that** said anti-rotation means comprises flat opposite faces (30, 32) of said base part (14; 14'; 14a; 14b; 14c).

3. An implant according to claim 1 wherein said anti-rotation means comprise a channel (26; 26') extending substantially longitudinally along at least part of the body (12).

4. An implant according to claim 1 wherein said projecting parts (16, 18, 20; 16', 18', 20') of the body have a roundish shape and said grooves (23, 25; 23', 25') are circumreferential grooves and have a bottom surface with a smaller diameter than the diameter of the projecting parts, said channel (26; 26') having a base diameter about equal to the diameter of said circumferential grooves.

5. An implant according to claim 1 wherein said base part has a rounded distal edge.

6. An implant according to claim 1 further comprising anti-rotation anchoring means in the form of one or more dead or through holes (40, 42; 40b; 42b) in said projecting parts.

7. An implant according to claim 1 **characterized in that** said anti-rotation means further comprises a combination of longitudinal channels and holes.

8. An implant according to claim 1 **characterized in that** said anti-rotation means further comprise tabs (44c, 46c) protruding from the base part.

9. An implant according to claim 8 wherein said tabs extend substantially vertically.

10. An implant according to claim 1 wherein said projecting parts have one of the following shapes: spherical, part-spherical, elliptical, part-elliptical, egg, part of an egg, solid body with an oval projection on a plane, with the long axis lengthwise or crosswise to the longitudinal axis of the implant.

## Patentansprüche

1. Ein Mundimplantat zur Verankerung und Befestigung einer Zahnprothese oder mehrerer Zähne oder gar einer festen Totalprothese am Knochenbereich des Ober- oder Unterkiefers; besagtes Implantat umfaßt eine « Kopfpartie » (12; 12'; 12 a; 12 b) und eine « Basispartie » (14; 14'; 14 a; 14 b, 14 c), die sich gegenseitig vervollständigen; Die « Kopfpartie » weist vorspringende Partien (16, 18, 20, 16', 18', 20', ... ) und Furchen (22, 24, 22', 24', ... ) auf, die sich entlang des Implantats abwechseln. Das Implantat ist mit Vorrichtungen (34, 34', 34 a, 34 b) zur Einfügung einer Heilschraube und zur Befestigung an einem Stumpf ausgestattet. Das Impfantat, das des weiteren ein Drehschutzsystem zur Gewährleistung der Verankerung an das Knochengewebe des Ober- oder Unterkiefers aufweist, kennzeichnet sich dadurch aus, daß die « Basispartie » (14; 14'; 14 a; 14 b) mindestens eine Querseite aufweist, die länger ist als die längste Querseite der « Kopfpartie », so daß sie eine Schulter formt (28, 28').

2. Ein Implantat gemäß Anspruch 1 kennzeichnet sich dadurch aus, daß das besagte Drehschutzsystem flache gegenüberliegende Flächen (30, 32) der « Basispartie » (14; 14'; 14 a; 14-b, 14 c) aufweist.

3. Ein Implantat gemäß Anspruch 1, wobei das Drehschutzsystem einen Kanal (26, 26') umfaßt, der sich im wesentlichen der Länge nach über mindestens einen Teil des Kopfes erstreckt (12).

4. Ein Implantat gemaß Anspruch 1, wobei die vorspringenden Partien (16, 18, 20, 16', 18', 20') des Kopfes eine rundliche Form und die Furchen (23, 25, 23', 25') eine kreisumfangende Form haben, der untere Bereich dieser Furchen weist einen kleineren Durchmesser auf als der untere Bereich der vorspringenden Partien; der Kanal (26, 26') hat einen Basisdurchmesser etwa in der Größe des Durchmessers der kreisförmigen Furchen.

5. Ein Implantat gemäß Anspruch 1, wobei die « Basispartie » eine runde distale Kante aufweist.

6. Ein Implantat gemäß Anspruch 1 umfaßt des weiteren im Rahmen des Drehschutzsystems ein oder mehrere blinde oder durchgehende Löcher (40, 42, 40 b, 42 b) in den vorspringenden Partien.

7. Ein Implantat gemäß Anspruch 1 umfaßt des weiteren im Rahmen des Drehschutzsystems eine Kombination von longitudinalen Kanälen und Löchern.

8. Ein Implantat gemäß Anspruch 1 umfaßt des weiteren im Rahmen des Drehschutzsystems Schlaufen (44 c, 46 c), die von der « Basispartie » hervorstehen.

9. Ein Implantat gemäß Anspruch 8, wobei die Schlaufen sich vor allem vertikal erstrecken.

10. Ein Implantat gemäß Anspruch 1, wobei die vorspringenden Partien eine der folgenden Formen aufweist: sphärisch, partiell sphärisch, elliptisch, partiell elliptisch, eiförmig, partiell eiförmig, solider Körper mit einer eiförmigen Projektion auf einer Ebene, mit der langen Achse der Länge nach oder kreuzweise im Verhältnis zu der longitudinalen Achse des Implantats.

## Revendications

1. Un implant buccal destiné à l'ancrage et à la fixation d'une prothèse de dent ou de plusieurs dents ou même d'une prothèse totale fixe sur la partie osseuse de la mâchoire supérieure ou inférieure; ledit implant comprend une partie « tête » (12; 12'; 12 a; 12 b) et une partie « base » (14; 14'; 14 a; 14 b, 14 c) s'intégrant l'une dans l'autre; la partie « tête » présente des parties saillantes (16, 18, 20, 16', 18', 20', ...) et des gorges (22, 24, 22', 24', ...) qui s'alternent sur la longueur de l'implant. L'implant est doté de moyens (34, 34', 34 a, 34 b) pour l'introduction d'une vis de cicatrisation et pour la fixation à un chicot. L'implant, qui comprend également un système anti-rotation pour assurer l'ancrage au tissu osseux de la mâchoire supérieure ou inférieure, est **caractérisé par** le fait que la partie « base » (14; 14'; 14 a; 14 b) possède au moins un côté tranverse plus long que le côté transverse le plus long de la partie « tête », de telle sorte qu'il forme un épaulement (28, 28').

2. Un implant correspondant à la revendication 1 **caractérisé par** le. fait que ledit système anti-rotation comprend des faces opposées aplaties (30, 32) de la partie « base» (14; 14'; 14 a; 14 b, 14 c).

3. Un implant correspondant à la revendication 1 dans lequel le système anti-rotation comprend un conduit (26, 26') qui s'étend surtout longitudinalement sur au moins une partie de la tête (12).

4. Un implant correspondant à la revendication 1 dans lequel les parties saillantes (16, 18, 20, 16', 18', 20') de la tête ont une silhouette arrondie et les gorges (23, 25, 23', 25') ont la forme d'une circonférence et la partie inférieure de ces dernières possède un diamètre inférieur à celui des parties saillantes; le conduit (26, 26') a une base de diamètre presque égal au diamètre des gorges circulaires.

5. Un implant correspondant à la revendication 1 dans lequel la partie « base » présente une arête distale arrondie.

6. Un implant correspondant à la revendication 1 comprenant également, dans le cadre du système anti-rotation, un ou plusieurs trous borgnes ou passants (40, 42, 40 b, 42 b) dans les parties saillantes.

7. Un implant correspondant à la revendication 1 comprenant également, dans le cadre du système anti-rotation, une combinaison de conduits et de trous longitudinaux.

8. Un implant correspondant à la revendication 1 comprenant également, dans le cadre du système anti-rotation, des oreillettes (44 c, 46 c) en saillie de la partie « base ».

9. Un implant correspondant à la revendication 8 dans lequel les oreillettes se développent surtout verticalement.

10. Un implant correspondant à la revendication 1 dans lequel les parties saillantes possèdent une des formes suivantes: sphérique, partiellement sphérique, elliptique, partiellement elliptique, ovoïdale, partiellement ovoïdale, corps solide avec une projection ovale sur un plan, avec l'axe long en longueur ou en travers par rapport à l'axe longitudinal de l'implant.
